# EUROPEAN PATENT APPLICATION

(11) **EP 3 537 422 A2**
(43) Date of publication of application: **11.09.2019**
(21) Application number: 17877299.2
(22) Date of filing: 31.03.2017
(51) Int. Cl.: G09G 3/36, G06F 3/048

(54) **PICTURE DISPLAY METHOD AND ELECTRONIC DEVICE**

(30) Priority: 29.11.2016 CN 201611072357
(71) Applicant: Huawei Technologies Co., Ltd., Longgang District Shenzhen, Guangdong 518129 (CN)
(72) Inventor: TAO, Rui, Shenzhen Guangdong 518129 (CN); WANG, Yali, Shenzhen Guangdong 518129 (CN); LIU, Jing, Shenzhen Guangdong 518129 (CN)
(74) Representative: Maiwald Patent- und Rechtsanwaltsgesellschaft mbH
(86) International application number: PCT/CN2017/079119
(87) International publication number: WO 2018/098959

(57) **Abstract**

This application discloses a picture display method and an electronic device, and relates to the field of electronic device technologies. The present invention aims to resolve a prior-art problem that costs of a blue light filtering method are high or blue light can be filtered out but a display effect is greatly affected. The picture display method provided in this application includes: determining, by an electronic device, a type of content included in a to-be-displayed picture; and when to-be-displayed content of a first type is included, reducing, by the electronic device upon displaying the to-be-displayed picture, a blue light component of a pixel in an area in which the to-be-displayed content of the first type is located. This application is applied to a process in which the electronic device displays a picture.

## Description

This application claims priority to Chinese Patent Application No. 201611072357.6, filed with the China National Intellectual Property Administration on November 29, 2016 and entitled "METHOD FOR FILTERING BLUE LIGHT OF DISPLAY AND DEVICE", which is incorporated herein by reference in its entirety. This application claims priority to Chinese Patent Application, filed with the China National Intellectual Property Administration on March 31, 2017 and entitled "INTERFACE DISPLAY METHOD AND ELECTRONIC DEVICE", which is incorporated herein by reference in its entirety.

### TECHNICAL FIELD

This application relates to the field of electronic device technologies, and in particular, to a picture display method and an electronic device.

### BACKGROUND

With popularization of electronic devices such as mobile phones and increasingly abundant functions of the electronic devices, many users prefer to use the electronic devices for a long time. However, a blue spectrum (blue light for short) generated by a display of an electronic device causes damage to eyes of a user to some extent, and long-term use may result in a plurality of ocular diseases.

To filter out or reduce blue light, the following method is generally used in the prior art: A liquid crystal display applying a red-green-blue (Red Green Blue, RGB) light emitting diode (Light Emitting Diode, LED) technology is used. The RGB LED technology uses red-green-blue composite light emission instead of complying with a conventional light emitting principle of blue light excitation phosphor. Therefore, an energy ratio of blue light in the spectrum is greatly reduced. However, costs of the liquid crystal display applying the RGB LED technology are high. Alternatively, specific software is installed in an electronic device. When the software is enabled, all blue components in a display can be filtered out, and consequently an overall display effect of the electronic device is yellowish after blue light is filtered out. Alternatively, a special film is attached onto an electronic device, and blue spectral components are filtered out by using this film. However, this method also leads to a yellowish overall display effect of the electronic device.

To sum up, a blue light filtering method has a prior-art problem that costs are high or blue light can be filtered out but a display effect is greatly affected.

### SUMMARY

This application provides a picture display method and an electronic device, to resolve a prior-art problem that costs of a blue light filtering method are high or blue light can be filtered out but a display effect is greatly affected.

To achieve the foregoing objective, the following technical solutions are used in this application.

According to a first aspect, this application provides a picture display method, applied to an electronic device, where the method includes: determining, by the electronic device, a type of content included in a to-be-displayed picture; and when to-be-displayed content of a first type is included, reducing, by the electronic device upon displaying the to-be-displayed picture, a blue light component in an area in which the to-be-displayed content of the first type is located.

Different content has different color requirements during display. On this basis, the to-be-displayed content is classified into content that has a relatively high color requirement and content that has a relatively low color requirement. The content that has a relatively high color requirement includes a picture, a video, and the like, and the content that has a relatively low color requirement includes characters such as text and a symbol. Content of the first type mentioned in this application is a character.

According to the picture display method provided in this embodiment of this application, when a picture needs to be displayed, the picture is displayed only after a blue light component in an area in which content of the first type is located is reduced based on a type of content included in the to-be-displayed picture. In the method, blue light filtering processing is performed on only some areas of the to-be-displayed picture, so that damage caused by blue light to a user is reduced on a premise that a good display effect is ensured, thereby achieving relatively good user experience.

In a possible design of the first aspect, the determining, by the electronic device, a type of content included in a to-be-displayed picture specifically includes: obtaining to-be-displayed content included in the to-be-displayed picture; extracting a feature of the to-be-displayed content; and performing pattern recognition based on the feature of the to-be-displayed content, and determining a type of the to-be-displayed content. In this implementation, the electronic device may determine the type of the to-be-displayed content in a pattern recognition manner.

In a possible design of the first aspect, the determining, by the electronic device, a type of content included in a to-be-displayed picture specifically includes: determining, by the electronic device, a type of a to-be-displayed file; and determining, based on the type of the to-be-displayed file, the type of the content included in the to-be-displayed picture. In this implementation, the to-be-displayed content is distinguished according to the type of the to-be-displayed file. For example, when the to-be-displayed file is a file mainly used to display a character, a document, or the like, such as a TXT, Word, or WPS file, the electronic device classifies to-be-displayed content in the file into the to-be-displayed content of the first type.

In a possible design of the first aspect, the reducing, by the electronic device upon displaying the to-be-displayed picture, a blue light component in an area in which the to-be-displayed content of the first type is located specifically includes: reducing, by the electronic device, a value of a B component in an RGB value of each pixel in the area in which the to-be-displayed content of the first type is located. In this implementation, the electronic device can reduce blue light components in some areas.

In a possible design of the first aspect, the reducing, by the electronic device upon displaying the to-be-displayed picture, a blue light component in an area in which the to-be-displayed content of the first type is located specifically includes: determining, by the electronic device, a ratio of a size of the area in which the to-be-displayed content of the first type is located to that of a display of the electronic device; and when the ratio is greater than a first value, reducing, by the electronic device, blue light components in all areas of the display of the electronic device. In this implementation, when most content included in the to-be-displayed picture is the to-be-displayed content of the first type, the electronic device reduces or filters out blue components on the entire display.

In a possible design of the first aspect, the reducing, by the electronic device upon displaying the to-be-displayed picture, blue light components of all pixels of the display of the electronic device includes: lowering, by the electronic device, a display color temperature of the display of the electronic device. In this implementation, the electronic device may perform blue light filtering processing on the entire display of the electronic device, to simplify a blue light filtering processing process.

In a possible design of the first aspect, when the electronic device displays the to-be-displayed picture, the method further includes: reducing, by the electronic device, a blue light component in a blank area of the to-be-displayed picture. In this implementation, the electronic device can further reduce a blue light component by reducing the blue light component in the blank area.

According to a second aspect, this application provides an electronic device, including: a determining unit, configured to determine a type of content included in a to-be-displayed picture; a blue light filtering unit, configured to: when the determining unit determines that the to-be-displayed picture includes to-be-displayed content of a first type, reduce a blue light component in an area in which the to-be-displayed content of the first type is located; and a display unit, configured to display a to-be-displayed picture obtained after processing by the blue light filtering unit.

In a possible design of the second aspect, the determining a type of content included in a to-be-displayed picture includes: obtaining to-be-displayed content included in the to-be-displayed picture; extracting a feature of the to-be-displayed content; and performing pattern recognition based on the feature of the to-be-displayed content, and determining a type of the to-be-displayed content.

In a possible design of the second aspect, the determining a type of content included in a to-be-displayed picture includes: determining a type of a to-be-displayed file; and determining, based on the type of the to-be-displayed file, the type of the content included in the to-be-displayed picture.

In a possible design of the second aspect, the reducing a blue light component in an area in which the to-be-displayed content of the first type is located includes: reducing a value of a B component in an RGB value of each pixel in the area in which the to-be-displayed content of the first type is located.

In a possible design of the second aspect, the reducing a blue light component in an area in which the to-be-displayed content of the first type is located includes: determining a ratio of a size of the area in which the to-be-displayed content of the first type is located to that of a display of the electronic device; and when the ratio is greater than a first value, reducing blue light components in all areas of the display of the electronic device.

According to a third aspect, this application provides an electronic device, including at least one processor and a display, where the at least one processor is configured to: determine a type of content included in a to-be-displayed picture; and when to-be-displayed content of a first type is included, reduce a blue light component in an area in which the to-be-displayed content of the first type is located; and the display is configured to display a to-be-displayed picture obtained after processing by the at least one processor.

In a possible design of the third aspect, the determining a type of content included in a to-be-displayed picture includes: obtaining to-be-displayed content included in the to-be-displayed picture; extracting a feature of the to-be-displayed content; and performing pattern recognition based on the feature of the to-be-displayed content, and determining a type of the to-be-displayed content.

In a possible design of the third aspect, the determining a type of content included in a to-be-displayed picture includes: determining a type of a to-be-displayed file; and determining, based on the type of the to-be-displayed file, the type of the content included in the to-be-displayed picture.

In a possible design of the third aspect, the reducing a blue light component in an area in which the to-be-displayed content of the first type is located includes: reducing a value of a B component in an RGB value of each pixel in the area in which the to-be-displayed content of the first type is located.

In a possible design of the third aspect, the at least one processor is further configured to: determine a ratio of a size of the area in which the to-be-displayed content of the first type is located to that of the display; and when the ratio is greater than a first value, reduce blue light components in all areas of the display.

In a possible design of the third aspect, the reducing blue light components in all areas of the display includes: lowering a display color temperature of the display of the electronic device.

In a possible design of the third aspect, the first type includes a character. In a possible design of the third aspect, the at least one processor is further configured to reduce a blue light component in a blank area of the to-be-displayed picture.

According to a fourth aspect, this application provides a computer readable storage medium, where the computer readable storage medium stores an instruction, and when the instruction runs on a computer, the computer performs the method in the first aspect.

According to a fifth aspect, this application provides a computer program product, where the computer program product includes an instruction, and when the instruction runs on a computer, the computer performs the method in the first aspect.

According to the picture display method and the electronic device that are provided in the embodiments of this application, when a picture needs to be displayed, the picture is displayed only after a blue light component in an area in which content of the first type is located is reduced by the electronic device based on a type of content included in the to-be-displayed picture. In the method, blue light filtering processing is performed on only some areas of the to-be-displayed picture, so that damage caused by blue light to a user is reduced on a premise that a good display effect is ensured, thereby achieving relatively good user experience.

### BRIEF DESCRIPTION OF DRAWINGS

FIG. 1 is a schematic structural diagram of a mobile phone according to an embodiment of this application;
FIG. 2 is a schematic flowchart of a picture display method according to an embodiment of this application;
FIG. 3a is a to-be-displayed picture on which no blue light filtering processing is performed;
FIG. 3b is a schematic diagram of a displayed picture obtained after blue light filtering processing is performed on an entire displayed picture by using the prior art;
FIG. 3c is a schematic diagram of a displayed picture on which blue light filtering processing is performed on some areas by using the method provided in this embodiment of this application;
FIG. 4 is a schematic flowchart of another picture display method according to an embodiment of this application;
FIG. 5a is a schematic diagram of a displayed picture when a type of a to-be-displayed file is a file mainly used for text processing, such as a Word, TXT, or WPS file;
FIG. 5b is a schematic diagram of a displayed picture when an electronic device determines that a type of a to-be-displayed file is a multimedia file such as a picture or an audio/video;
FIG. 5c is a schematic diagram of a displayed picture when a to-be-displayed file is a web page;
FIG. 6 is a schematic flowchart of still another picture display method according to an embodiment of this application;
FIG. 7 is a schematic flowchart of yet another picture display method according to an embodiment of this application;
FIG. 8 is a schematic diagram of adjusting a white dot for display color temperature adjustment according to an embodiment of this application;
FIG. 9 is a schematic flowchart of still yet another picture display method according to an embodiment of this application;
FIG. 10 is a schematic diagram of a displayed picture obtained after blue light filtering processing is performed on both a blank area and a character area according to an embodiment of this application;
FIG. 11 is a composition block diagram of an electronic device according to an embodiment of this application;
FIG. 12 is a composition block diagram of another electronic device according to an embodiment of this application; and
FIG. 13 is a schematic structural diagram of still another electronic device according to an embodiment of this application.

### DESCRIPTION OF EMBODIMENTS

A picture display method provided in the embodiments of this application may be applied to an electronic device. The electronic device may be a terminal such as a mobile phone, a personal computer (Personal Computer, PC), a tablet computer, a notebook computer, an ultra-mobile personal computer (Ultra-mobile Personal Computer, UMPC), a netbook, or a personal digital assistant (Personal Digital Assistant, PDA).

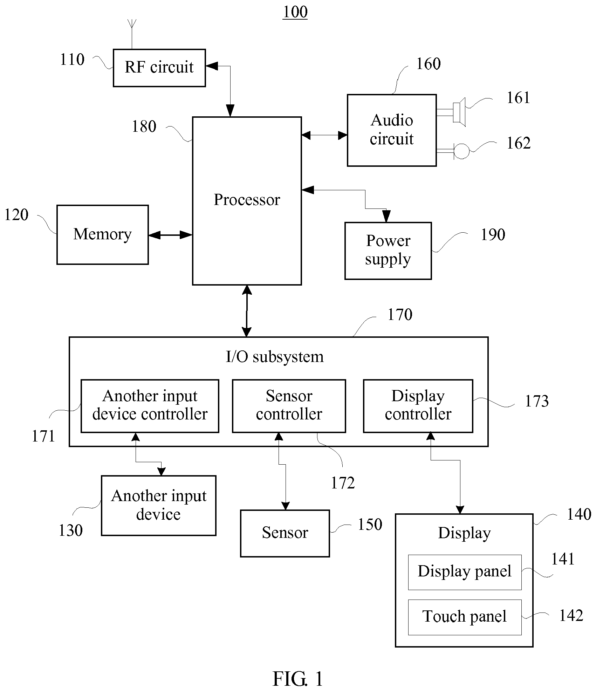

In the embodiments of this application, that the electronic device is a mobile phone is used as an example for description. FIG. 1 is a block diagram of a partial structure of a mobile phone 100 related to the embodiments of this application.

As shown in FIG. 1, the mobile phone 10 includes components such as a radio frequency (Radio Frequency, RF) circuit 110, a memory 120, another input device 130, a display 140, a sensor 150, an audio circuit 160, an I/O subsystem 170, a processor 180, and a power supply 190. A person skilled in the art may understand that the structure of the mobile phone shown in FIG. 1 imposes no limitation on the mobile phone, and may include more or fewer components than those shown in the figure, or combine some components, split some components, or have different component arrangements. The mobile phone 100 may include more or fewer user interfaces than those shown in the figure. The following describes each component of the mobile phone 100 in detail with reference to FIG. 1.

The RF circuit 110 may be configured to receive and send signals in an information receiving or sending process or a call process. Particularly, after receiving downlink information from a base station, the RF circuit 110 sends the downlink information to the processor 180 for processing, and in addition, sends designed uplink data to the base station. Generally, the RF circuit includes but is not limited to an antenna, at least one amplifier, a transceiver, a coupler, an LNA (Low Noise Amplifier, low noise amplifier), and a duplexer. In addition, the RF circuit 110 may communicate with a network and another device through wireless communications. The wireless communications may use any one communications standard or protocol, including but not limited to GSM (Global System of Mobile communication, Global System for Mobile Communications), GPRS (General Packet Radio Service, general packet radio service), CDMA (Code Division Multiple Access, Code Division Multiple Access), WCDMA (Wideband Code Division Multiple Access, Wideband Code Division Multiple Access), LTE (Long Term Evolution, Long Term Evolution), e-mail, SMS (Short Messaging Service, Short Messaging Service), and the like.

The memory 120 may be configured to store a software program and a module. By running the software program and the module that are stored in the memory 120, the processor 180 executes various function applications of the mobile phone 100 and processes data. The memory 120 may mainly include a program storage area and a data storage area. The program storage area may store an operating system, an application program required by at least one function (such as a sound play function or an image play function), and the like. The data storage area may store data (such as audio data or a phone book) created based on use of the mobile phone 100, and the like. In addition, the memory 120 may include a high-speed random access memory, or may include a nonvolatile memory, such as at least one magnetic disk storage device, a flash storage device, or another volatile solid-state storage device.

The another input device 130 may be configured to: receive entered digital or character information, and generate key signal input related to user settings and function control of the mobile phone 100. Specifically, the another input device 130 may include but is not limited to one or more of a physical keyboard, a function key (such as a volume control key or an on/off key), a trackball, a mouse, a joystick, and an optical mouse (the optical mouse is a touch-sensitive surface that does not display visual output, or an extension of a touch-sensitive surface formed by a touchscreen). The another input device 130 is connected to another input device controller 171 in the I/O subsystem 170, and performs signal exchange with the processor 180 under the control of the another device input controller 171.

The display 140 may be configured to display information entered by a user or information provided for a user, and various menus of the mobile phone 100, and may further receive user input. Specifically, the display 140 may include a display panel 141 and a touch panel 142. The display panel 141 may be configured in a form of an LCD (Liquid Crystal Display, liquid crystal display), an OLED (Organic Light-Emitting Diode, organic light-emitting diode), or the like.

The touch panel 142 is also referred to as a touchscreen, a touch-sensitive screen, or the like, and may collect a touch or non-touch operation (such as an operation performed by the user on or near the touch panel 142 by using any proper object or accessory such as a finger or a stylus, or a motion sensing operation, where the operation includes an operation type such as a single-point control operation or a multi-point control operation) of the user on or near the touch panel 142, and drive a corresponding connection apparatus according to a preset program. Optionally, the touch panel 142 may include two parts: a touch detection apparatus and a touch controller. The touch detection apparatus detects a touch location and a touch gesture of the user, detects a signal brought by a touch operation, and sends the signal to the touch controller. The touch controller receives touch information from the touch detection apparatus, converts the touch information into information that can be processed by the processor, and then sends the information to the processor 180, and can receive and execute a command sent by the processor 180. In addition, the touch panel 142 may be implemented by using a plurality of types, such as a resistive type, a capacitive type, an infrared ray, or a surface acoustic wave type, or the touch panel 142 may be implemented by using any technology developed in the future. Further, the touch panel 142 may cover the display panel 141, and the user may perform, based on content displayed on the display panel 141 (the displayed content includes but is not limited to a soft keyboard, a virtual mouse, a virtual key, and an icon), an operation on or near the touch panel 142 that covers the display panel 141. After the touch panel 142 detects the operation on or near the touch panel 142, the touch panel 142 sends the operation to the processor 180 by using the I/O subsystem 170 to determine user input. Then, the processor 180 provides, based on the user input, corresponding visual output on the display panel 141 by using the I/O subsystem 170. Although the touch panel 142 and the display panel 141 in FIG. 1 are used as two independent components to implement input and input functions of the mobile phone 100, in some embodiments, the touch panel 142 and the display panel 141 may be integrated to implement the input and output functions of the mobile phone 100.

The mobile phone 100 may further include at least one sensor 150, such as a light sensor, a motion sensor, and another sensor. Specifically, the light sensor may include an ambient light sensor and a proximity sensor. The ambient light sensor may adjust luminance of the display panel 141 based on brightness or dimness of ambient light. The proximity sensor may turn off the display panel 141 and/or backlight when the mobile phone 100 moves to an ear of the user. As a type of motion sensor, an accelerometer sensor may detect an acceleration value in each direction (generally three axes), may detect a value and a direction of gravity when the mobile phone 100 is stationary, and may be applied to an application for recognizing a mobile phone posture (for example, a switch between landscape and portrait screens, a related game, and magnetometer posture calibration), a function related to vibration recognition (such as a pedometer or a knock), and the like. Other sensors such as a gyroscope, a barometer, a hygrometer, a thermometer, and an infrared sensor may also be disposed on the mobile phone 100, which is not described herein.

The audio circuit 160, a loudspeaker 161, and a microphone 162 may provide an audio interface between the user and the mobile phone 100. The audio circuit 160 may convert received audio data into a signal, and transmit the signal to the loudspeaker 161, and the loudspeaker 161 converts the signal into a sound signal for output. In another aspect, the microphone 162 converts a collected sound signal into a signal, and the audio circuit 160 converts the signal into audio data after receiving the signal, and then outputs the audio data to the RF circuit 110, to send the audio data to, for example, another mobile phone, or output the audio data to the memory 120 for further processing.

The I/O subsystem 170 is configured to detect an external input/output device, and may include the another device input controller 171, a sensor controller 172, and a display controller 173. Optionally, one or more other input control device controllers 171 receive signals from the another input device 130 and/or send signals to the another input device 130. The another input device 130 may include a physical button (a press button, a rocker button, or the like), a dial pad, a slider switch, a joystick, a click scroll wheel, and an optical mouse (the optical mouse is a touch-sensitive surface that does not display visual output, or an extension of a touch-sensitive surface formed by a touchscreen). It should be noted that the another input control device controller 171 may be connected to any one or more of the foregoing devices. The display controller 173 in the I/O subsystem 170 receives a signal from the display 140 and/or sends a signal to the display 140. After the display 140 detects user input, the display controller 173 converts the detected user input into interaction that is corresponding to a user interface displayed on the display 140, to implement human-computer interaction. The sensor controller 172 may receive a signal from one or more sensors 150 and/or send a signal to one or more sensors 150. Certainly, one or more sensors 150 of the electronic device in this embodiment of this application include an ambient light sensor (Ambient Light Sensor, ALS). The ambient light sensor is configured to detect ambient light of an environment in which the electronic device is located, and the ambient light sensor may continuously or periodically monitor the ambient light of the environment in which the electronic device is located. Certainly, the one or more sensors 150 may further include a location sensor configured to determine a location of the electronic device, and the location sensor may continuously or periodically monitor the location of the electronic device.

The processor 180 is a control center of the mobile phone 100, connects various parts of the entire mobile phone by using various interfaces and lines, and executes various functions of the mobile phone 100 and processes data by running or executing the software program and/or the module that are/is stored in the memory 120 and by invoking data stored in the memory 120, to perform overall monitoring on the mobile phone. Optionally, the processor 180 may include one or more processing units. The processor 180 may integrate an application processor and a modem processor, where the application processor mainly processes an operating system, a user interface, an application program, and the like; and the modem processor mainly processes wireless communication. It can be understood that the foregoing modem processor may not be integrated into the processor 180.

The mobile phone 100 further includes the power supply 190 (such as a battery) that supplies power to each component. Optionally, the power supply 190 may be logically connected to the processor 180 by using a power management system, to implement functions such as charging management, discharging management, and power consumption management by using the power management system. Although not shown, the mobile phone 100 may further include a camera, a Wireless Fidelity (wireless fidelity, Wi-Fi) module, a Global Positioning System (Global Positioning System, GPS) module, a Bluetooth module, and the like. Details are not described in this embodiment of this application.

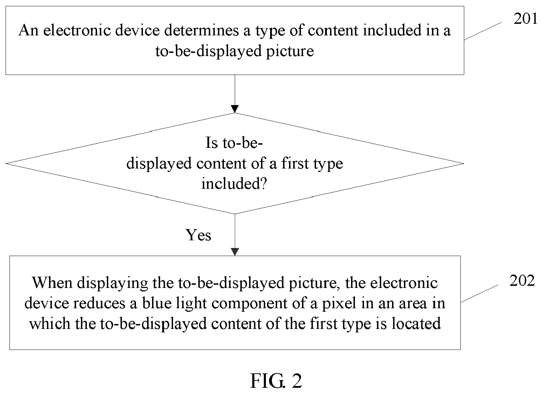

The picture display method provided in this embodiment of this application is executed by an electronic device, and mainly relates to components such as a processor and a display that are of the electronic device. As shown in FIG. 2, the method includes the following steps.

Step 201: The electronic device determines a type of content included in a to-be-displayed picture.

The content included in the to-be-displayed picture may be a character, a digit, a symbol, an animation, a picture, a video, or the like. Generally, when displaying an animation, a picture, and a video, to achieve a good display effect to ensure user experience, color distortion needs to be reduced, and color restoration needs to be ensured as much as possible, that is, this type of content has a relatively high color requirement during display. When characters such as text, a digit, and a symbol are displayed, a main function of the characters is to display a meaning to be expressed by the characters, that is, a color requirement is lower than that of the previous type of content. Therefore, the content included in the to-be-displayed picture may be classified into characters and non-characters according to different color requirements during display. The characters include text, a digit, a symbol, and the like. The non-characters include an animation, a picture, a video, and the like.

Step 202: When to-be-displayed content of a first type is included, the electronic device reduces, upon displaying the to-be-displayed picture, a blue light component in an area in which the to-be-displayed content of the first type is located.

The to-be-displayed content of the first type is displayed content that has a relatively low color requirement, and includes characters such as text, a digit, and a symbol.

In this step, upon displaying the to-be-displayed picture, the electronic device performs blue light filtering processing on the to-be-displayed picture.

That the electronic device is a mobile phone is used as an example. The method provided in this embodiment of this application may be applied to the following application scenarios.

For example, when a user uses the mobile phone to open an application in a plain text state, such as a novel or a document, and the method in this embodiment of this application is used to determine that text is displayed on the entire screen, blue light filtering processing is performed on the entire screen.

When the user uses an application such as a photographing or video application and full-screen display is provided, and the method in this embodiment of this application is used to determine that non-characters are displayed on the entire screen, no blue light filtering processing is performed.

When the user uses some applications in which text, a picture, and a video are all arranged, the method in this embodiment of this application is used to determine an area in which each piece of content is located. Blue light filtering processing is not performed for a picture area and/or a video display area, and is performed for a text area

According to the picture display method provided in this embodiment of this application, when a picture needs to be displayed, the picture is displayed only after a blue light component in an area in which content of the first type is located is reduced based on a type of content included in the to-be-displayed picture. In the method, blue light filtering processing is performed on only some areas of the to-be-displayed picture, so that damage caused by blue light to a user is reduced on a premise that a good display effect is ensured, thereby achieving relatively good user experience.

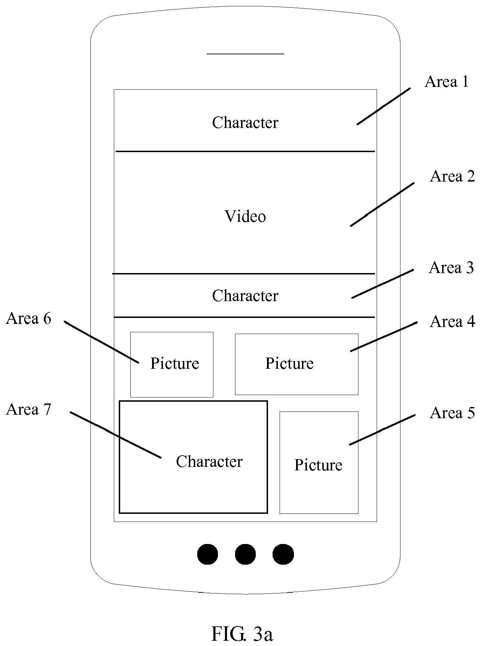

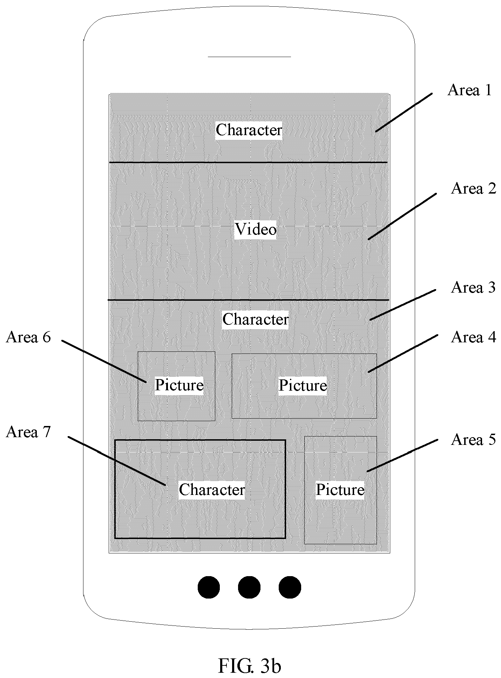

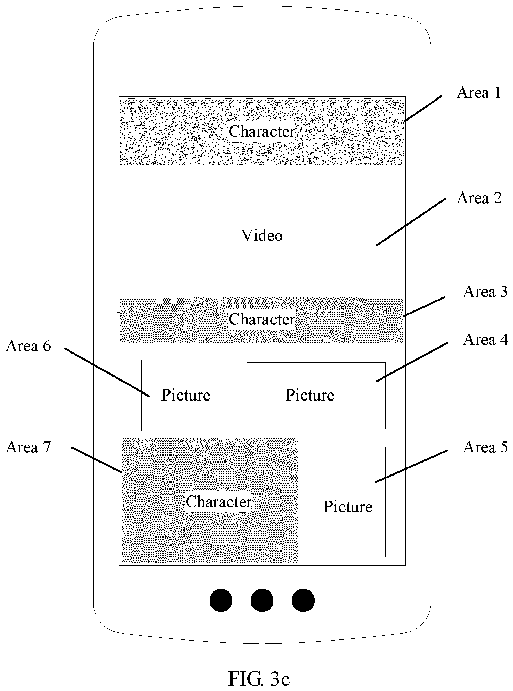

To describe the method provided in this embodiment of this application more clearly, as shown in FIG. 3a, a to-be-displayed picture on which no blue light filtering processing is performed may be divided into seven areas according to displayed content, where areas 1, 3, and 7 are text areas, area 2 is a video area, and areas 4, 5, and 6 are picture areas. According to a blue light filtering method in the prior art, blue light filtering processing needs to be performed on all areas (in the figure, a gray area is used to represent an area on which blue light filtering processing is performed), to obtain a to-be-displayed picture shown in FIG. 3b. According to the method provided in this embodiment of this application, blue light processing is performed only on text areas such as areas 1, 3, and 7 (in the figure, a gray area is used to represent an area on which blue light filtering processing is performed), to obtain a to-be-displayed picture shown in FIG. 3c. In actual application, the displayed picture shown in FIG. 3b obtained after blue light processing is performed on the entire displayed picture is yellowish in a whole and a display effect is poor. An overall display effect of the displayed picture shown in FIG. 3c obtained after processing by using the method provided in this embodiment of this application is less different from the to-be-displayed picture shown in FIG. 3a on which no blue light processing is performed. Actually, the text part has already undergone blue light filtering processing, which helps protect the user's eyes.

Different content included in the to-be-displayed picture has different features. Therefore, based on the different features of the different content, in a possible implementation of step 201, content specifically included in the to-be-displayed picture may be determined in a pattern recognition manner. This process specifically includes the following steps.

Step 1: Obtain to-be-displayed content included in a to-be-displayed picture.

Before displaying the to-be-displayed picture, the electronic device obtains and caches content of the to-be-displayed picture. Therefore, the to-be-displayed content may be obtained from a cache.

Step 2: Extract a feature of the to-be-displayed content.

Step 3: Perform pattern recognition based on the feature of the to-be-displayed content, and determine a type of the to-be-displayed content.

In specific implementation of this process, a computer defines different representation methods for characters such a letter, a digit, and a Chinese character. For example, because there are various Chinese characters and more than 6000 ones are commonly used, two of 128 rarely used high values in the ASCII table may be used as a group to represent a Chinese character, that is, a Chinese character inner code. Remaining 128 low values are reserved for English characters, that is, English inner codes. After the Chinese character inner code is obtained, the inner code is only a group of digits. To display text on a display, the inner code further needs to be combined with a character pattern of the text. The character pattern is also a group of digits, and uses bit information of the digits to record a shape of an English character or a Chinese character. Therefore, characters may be recognized based on different representation methods of the characters. A picture may be obtained through matching based on a signal waveform. For a specific implementation process in which the display identifies whether the to-be-displayed content is a character or a non-character, refer to the prior art, and details are not described in this embodiment of this application.

A plurality of pattern recognition algorithms are provided in the prior art. Therefore, for specific implementation of pattern recognition, refer to the prior art, and details are not described in this embodiment of this application.

According to the foregoing steps 1 to 3, an embodiment of this application provides a processing method for determining, by using a pattern recognition method, the type of the to-be-displayed content included in the to-be-displayed picture. The method is universal and may be used for any type of to-be-displayed picture.

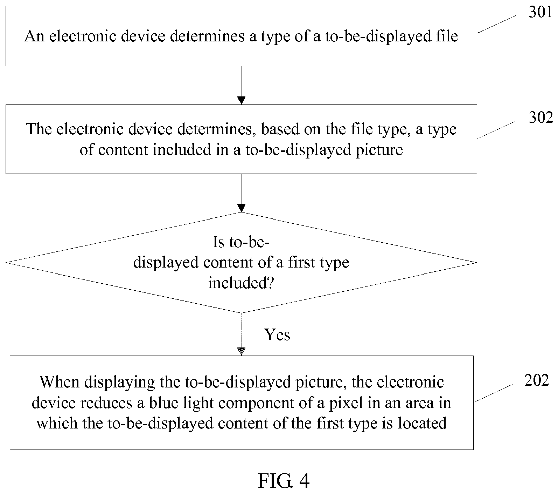

Optionally, in a possible implementation of step 201, as shown in FIG. 4, the method provided in this embodiment of this application includes the following steps.

Step 301: The electronic device determines a type of a to-be-displayed file.

Step 302: The electronic device determines, based on the type of the to-be-displayed file, the type of the content included in the to-be-displayed picture.

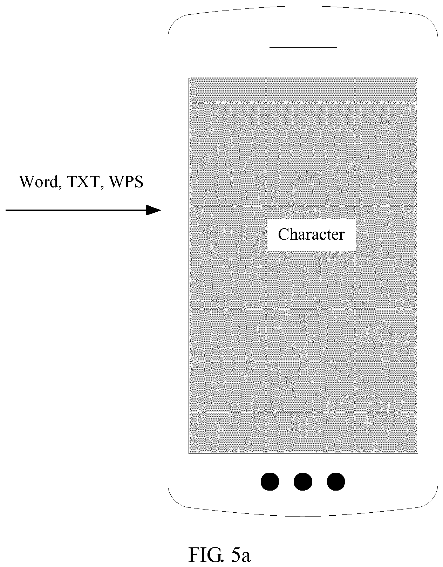

For example, as shown in FIG. 5a, when the electronic device determines that the type of the to-be-displayed file is a file mainly used for text processing, such as a Word, TXT, or WPS file, the electronic device determines to-be-displayed content in the entire file as content on which blue light filtering processing needs to be performed, to be specific, the content of the first type in this embodiment of this application. When files of these types are displayed, blue light filtering processing needs to be performed on the entire screen (in the figure, a gray area is used to represent an area on which blue light filtering processing is performed).

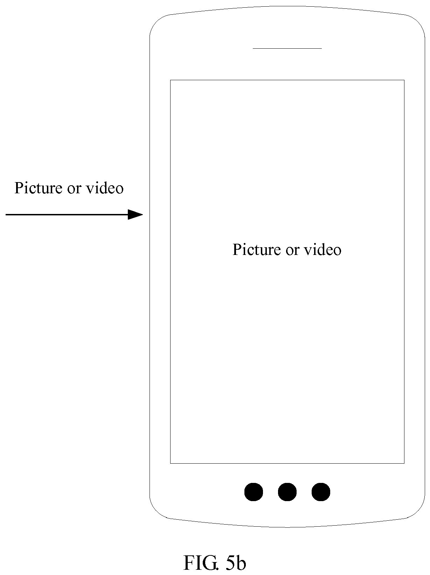

As shown in FIG. 5b, when determining that the type of the to-be-displayed file is a multimedia file such as a picture or an audio/video, the electronic device may not perform blue light filtering processing on these to-be-displayed files upon displaying these to-be-displayed files.

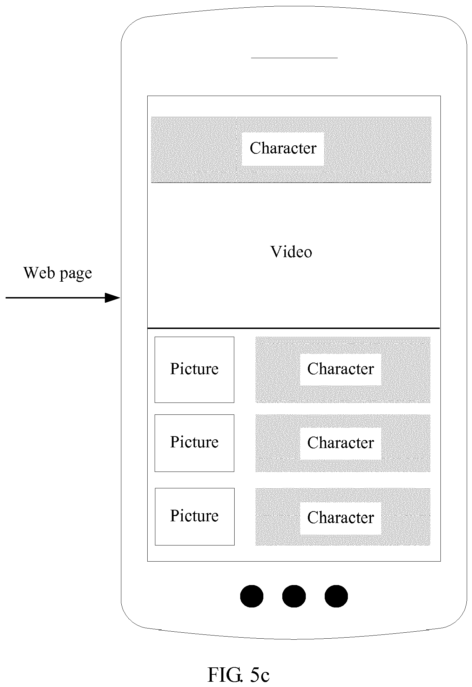

Considering particularity of a web page, the web page may include both character-type content such as text and content such as a flash and a video. When the to-be-displayed file is a web page, the method provided in this embodiment of this application includes: determining a type of each element on the web page. As shown in FIG. 5c, when a character-type element such as text is included, blue light filtering processing needs to be performed upon displaying the character-type element (in the figure, a gray area is used to represent an area on which blue light filtering processing is performed). When an element such as a picture or an animation is included, blue light filtering processing does not need to be performed upon displaying such an element.

When the type of each element on the web page is determined, with reference to a web page rendering process, layout information that is corresponding to the web page and that includes an attribute, a size, a location, and the like of each element on the web page is usually generated in a process of rendering the web page. The electronic device may determine a type of an element on the web page based on an attribute of the element, determine an area in which the element is located based on a size, a location, and the like of the element, and further, when a character-type element such as a character is included, perform blue light filtering processing on an area in which the character-type element is located. When elements such as a picture and an animation are included, blue light filtering processing does not need to be performed on areas in which the elements are located. For a specific implementation process, refer to the prior art.

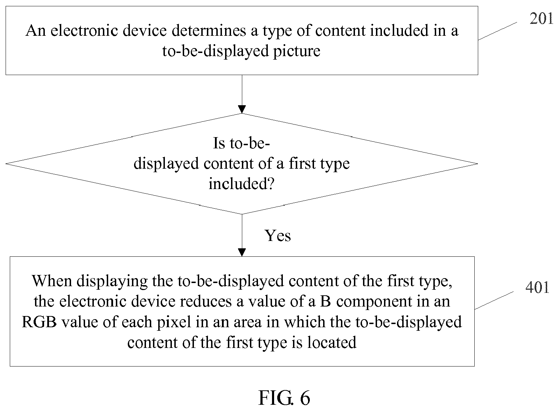

Optionally, after a display area in which blue light filtering processing or blue light reduction processing needs to be performed is determined, as shown in FIG. 6, step 202 "the electronic device reduces, upon displaying the to-be-displayed picture, a blue light component in an area in which the to-be-displayed content of the first type is located" may be specifically implemented as follows:
Step 401: The electronic device reduces a value of a B component in an RGB value of each pixel in an area in which the to-be-displayed content of the first type is located.

In red, green, and blue (Red, Green, Blue, RGB) components corresponding to each pixel, a value of the B component indicates a value of a blue light component of a color element dot.

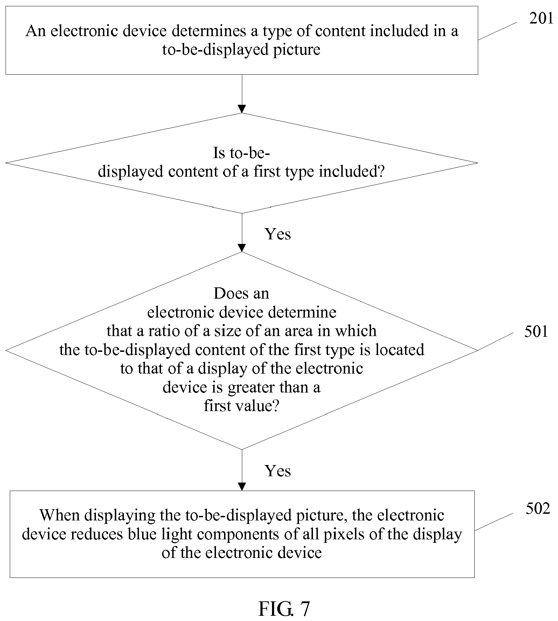

The blue light filtering or reduction method shown in step 401 is mainly applied to a case in which an area requiring a blue light filtering operation is a part of an area of the to-be-displayed picture. When an area on which blue light processing needs to be performed is the entire display or a majority of the display, as shown in FIG. 7, step 202 "the electronic device reduces a blue light component of a pixel in an area in which the to-be-displayed content of the first type is located" may be specifically implemented as follows:
Step 501: The electronic device determines a ratio of a size of the area in which the to-be-displayed content of the first type is located to that of a display of the electronic device.
Step 502: When the ratio is greater than a first value, the electronic device reduces blue light components of all pixels of the display of the electronic device.

The first value may be set before delivery of the electronic device. The user may also adjust the first value based on an actual requirement in a process of using the electronic device. When the ratio of the size of the area in which the to-be-displayed content is located to that of the display of the electronic device is greater than the first value, it indicates that most of the to-be-displayed content in the to-be-displayed picture is content that has a relatively low color requirement. To simplify processing, the electronic device reduces the blue light components of all pixels of the entire display of the electronic device.

Optionally, in specific implementation of this step, the electronic device may perform blue light filtering processing on the entire display of the electronic device by reducing a display color temperature of the display of the electronic device.

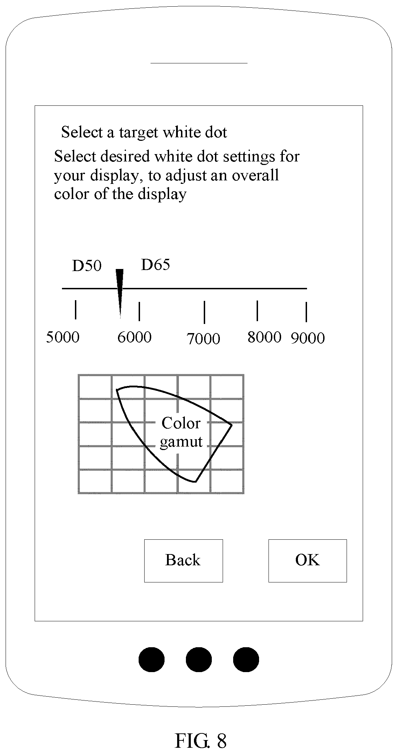

The display color temperature affects a displayed color of the display. A method for adjusting a display color temperature is adjusting a white dot of the display. As shown in FIG. 8, 5000K, 6000K, 7000K, 8000K, and 9000K each indicate a color temperature of the display. The white dot may be adjusted by sliding an arrow to further adjust a color temperature. With reference to FIG. 8, the white dot of the display is adjusted by sliding the arrow to the left, for example, adjusted from D65 or higher of a standard light source to D50, a corresponding color temperature of the display is adjusted from 6000K to 5000K and is reduced, and blue components of the entire display are reduced. For specific implementation, refer to the prior art. Details are not described in this embodiment of this application.

Optionally, for a display that actively emits light, such as an organic light-emitting diode (Organic Light-Emitting Diode, OLED) display, because the display has an area-based adjustment function, the area-based adjustment function of the OLED display may be used to reduce a display color temperature of only the area in which the to-be-displayed content of the first type is located.

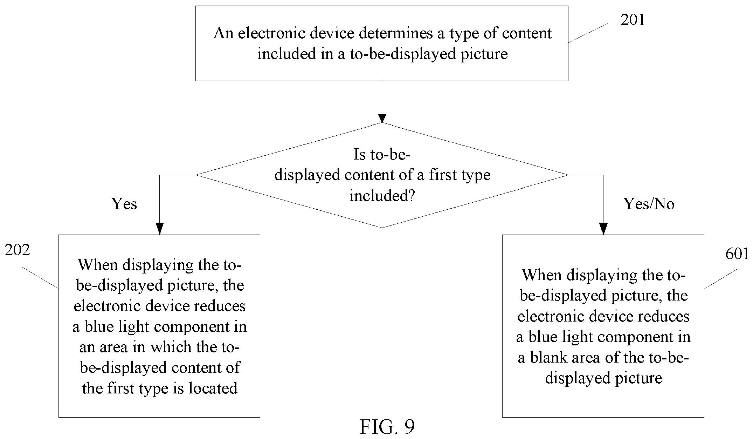

Optionally, it is considered that not all areas in the to-be-displayed picture have content that needs to be displayed, that is, there is a blank area. Therefore, as shown in FIG. 9, when the to-be-displayed picture is displayed, the method further includes the following step.

Step 601: The electronic device reduces a blue light component in a blank area of the to-be-displayed picture.

Optionally, in specific implementation of this step, the electronic device reduces blue light components of all pixels included in the blank area of the to-be-displayed picture.

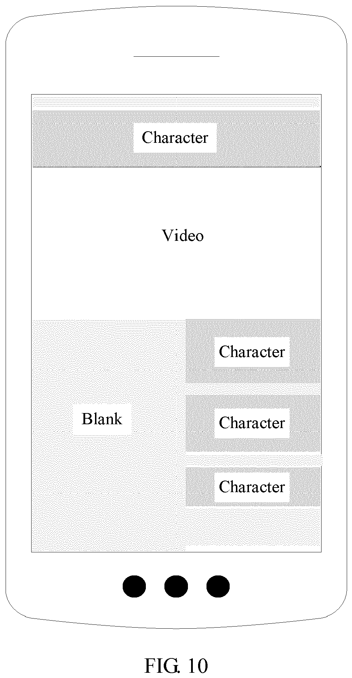

As shown in FIG. 10, when a picture is displayed by using the method in this embodiment of this application, blue light filtering processing is performed on both a blank area and a text area of the picture (in the figure, a gray area is used to represent an area on which blue light filtering processing is performed), to further reduce damage caused by blue light to the user.

According to the picture display method provided in this embodiment of this application, before the to-be-displayed picture is displayed, blue light filtering processing is performed on a blank area including no content, in addition to an area in the to-be-displayed picture in which to-be-displayed content having a relatively low color requirement is located, so that an amount of blue light can be further reduced, and damage caused by blue light to the user is further reduced.

The foregoing mainly describes the solutions provided in the embodiments of this application from a perspective of the electronic device. It may be understood that, to implement the foregoing functions, the electronic device includes a corresponding hardware structure and/or software module for implementing each function. A person skilled in the art should easily be aware that, in combination with the examples described in the embodiments disclosed in this specification, units, algorithms, and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, function module division may be performed on the electronic device according to the foregoing method examples. For example, each function module may be obtained by division according to a corresponding function, or two or more functions may be integrated into one processing module. The integrated module may be implemented in a form of hardware, or may be implemented in a form of a software functional module. It should be noted that the module division in the embodiments of this application is an example, and is merely logical function division and may be another division manner in an actual implementation.

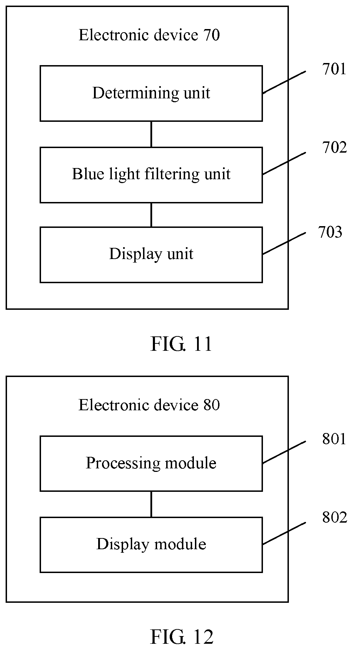

When function modules are obtained by division according to corresponding functions, FIG. 11 is a possible schematic structural diagram of an electronic device in the foregoing embodiments. An electronic device 70 includes a determining unit 701, a blue light filtering unit 702, and a display unit 703. The determining unit 701 is configured to support the electronic device in performing the processes 201, 301, and 302 described in the foregoing embodiments. The blue light filtering unit 701 is configured to support the electronic device in performing the processes 202, 401, 501, 502, and 601 described in the foregoing embodiments. The display unit 703 is configured to support the electronic device 70 in displaying the to-be-displayed picture. All related content of each step used in the foregoing method embodiments may be cited in function description of a corresponding function module, and details are not described herein.

When an integrated unit is used, FIG. 12 is a possible schematic structural diagram of the electronic device in the foregoing embodiments. An electronic device 80 includes a processing module 801 and a display module 802. The processing module 801 is configured to control and manage an action of the electronic device 80. For example, the processing module 801 is configured to support the electronic device 80 in performing the processes 201, 202, 301 to 304, 401, 501, 502, and 601 in the steps described in the foregoing embodiments, and/or other processes in technologies described in this specification. The display module 203 is configured to support the electronic device 80 in displaying the to-be-displayed picture. The electronic device 80 may further include a storage module, configured to store program code and data of the electronic device. The electronic device may further include a communications module, configured to support the electronic device in communicating with another device.

The processing module 801 may be a processor or a controller, such as a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logical device, a transistor logical device, a hardware component, or a combination thereof. The controller/processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The display module 802 may be a transceiver, a transceiver circuit, a communications interface, or the like.

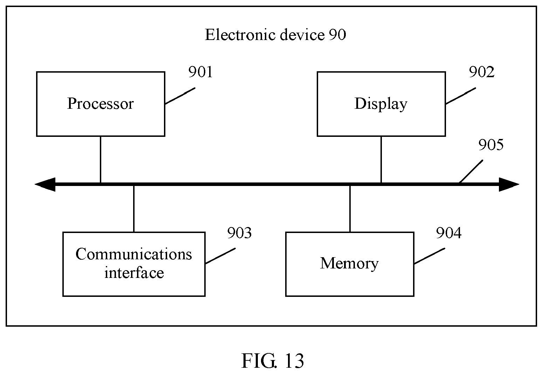

When the processing module 801 is a processor and the display module 802 is a display, the electronic device 80 used in this embodiment of this application may be the electronic device shown in FIG. 13.

Referring to FIG. 13, the electronic device 90 includes at least one processor 901 and a display 902. The electronic device may further include a communications interface 903, a memory 904, and a bus 905. The at least one processor 901, the display 902, the communications interface 903, and the memory 904 are connected to each other by using the bus 905.

The at least one processor 901 includes a dedicated processor, and the dedicated processor may include at least one of a baseband processing chip, a radio frequency processing chip, or the like. Further, the dedicated processor may further include a chip that has another dedicated processing function of user equipment, for example, a graphics processing unit (Graphics Processing Unit, GPU). When there are two or more processors, the two or more processors may cooperate with each other by referring to a scheduling method in the prior art, and details are not described in this embodiment of this application.

The communications interface may be a transceiver, a transceiver circuit, or a communications interface. For example, the communications interface of the electronic device 100 may be specifically a transceiver on the electronic device. The transceiver may be a wireless transceiver. For example, the wireless transceiver may be an antenna of the electronic device or the like. The at least one processor 901 receives data from or sends data to another device such as a base station by using the communications interface.

The memory is configured to store a computer-executable instruction, the processor is connected to the memory by using the bus, and when the electronic device runs, the at least one processor 901 executes the computer-executable instruction stored in the memory, so that the electronic device executes the processes 201, 202, 301 to 304, 401, 501, 502, and process 601 that are described in the foregoing embodiments. The display 902 is configured to support the electronic device in displaying the to-be-displayed picture obtained after the processor performs blue light filtering processing, and/or is used in another process of a technology described in this specification. The memory may include a volatile memory (English: volatile memory), for example, a random access memory (random-access memory, RAM); the memory may also include a non-volatile memory (English: non-volatile memory), for example, a read-only memory (read-only memory, ROM), a flash memory (English: flash memory), a hard disk (hard disk drive, HDD), or a solid-state drive (solid-state drive, SSD); and the memory may further include a combination of the foregoing types of memories.

The bus may include a data bus, a power bus, a control bus, a signal status bus, and the like.

Method or algorithm steps described in combination with the content disclosed in this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC.

Method or algorithm steps described in combination with the content disclosed in this application may be implemented by hardware, or may be implemented by a processor by executing a software instruction. The software instruction may be formed by a corresponding software module. The software module may be located in a RAM, a flash memory, a ROM, an EPROM, an EEPROM, a register, a hard disk, a removable hard disk, a compact disc read-only memory, or a storage medium of any other form known in the art. For example, a storage medium is coupled to a processor, so that the processor can read information from the storage medium or write information into the storage medium. Certainly, the storage medium may be a component of the processor. The processor and the storage medium may be located in the ASIC.

A person skilled in the art should be aware that in the foregoing one or more examples, functions described in this application may be implemented by hardware, software, firmware, or any combination thereof. When this application is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The foregoing descriptions are merely specific implementations of this application, but are not intended to limit the protection scope of this application. Any variation or replacement within the technical scope disclosed in this application shall fall within the protection scope of this application.

## Claims

1. A picture display method, applied to an electronic device, wherein the method comprises:
determining, by the electronic device, a type of content comprised in a to-be-displayed picture; and
when to-be-displayed content of a first type is comprised, reducing, by the electronic device upon displaying the to-be-displayed picture, a blue light component in an area in which the to-be-displayed content of the first type is located.

2. The method according to claim 1, wherein the determining, by the electronic device, a type of content comprised in a to-be-displayed picture specifically comprises:
obtaining, by the electronic device, to-be-displayed content comprised in the to-be-displayed picture;
extracting, by the electronic device, a feature of the to-be-displayed content; and
performing, by the electronic device, pattern recognition based on the feature of the to-be-displayed content, and determining a type of the to-be-displayed content.

3. The method according to claim 1, wherein the determining, by the electronic device, a type of content comprised in a to-be-displayed picture further specifically comprises:
determining, by the electronic device, a type of a to-be-displayed file; and
determining, by the electronic device based on the type of the to-be-displayed file, the type of the content comprised in the to-be-displayed picture.

4. The method according to any one of claims 1 to 3, wherein the reducing, by the electronic device upon displaying the to-be-displayed picture, a blue light component in an area in which the to-be-displayed content of the first type is located specifically comprises:
reducing, by the electronic device upon displaying the to-be-displayed picture, a value of a B component in an RGB value of each pixel in the area in which the to-be-displayed content of the first type is located.

5. The method according to any one of claims 1 to 3, wherein the reducing, by the electronic device upon displaying the to-be-displayed picture, a blue light component in an area in which the to-be-displayed content of the first type is located further specifically comprises:
determining, by the electronic device upon displaying the to-be-displayed picture, a ratio of a size of the area in which the to-be-displayed content of the first type is located to that of a display of the electronic device; and
when the ratio is greater than a first value, reducing, by the electronic device, blue light components in all areas of the display of the electronic device.

6. The method according to claim 5, wherein the reducing, by the electronic device upon displaying the to-be-displayed picture, blue light components in all areas of the display of the electronic device comprises:
lowering, by the electronic device upon displaying the to-be-displayed picture, a display color temperature of the display of the electronic device.

7. The method according to any one of claims 1 to 6, wherein the first type comprises a character.

8. The method according to any one of claims 1 to 7, wherein when the electronic device displays the to-be-displayed picture, the method further comprises:
reducing, by the electronic device, a blue light component in a blank area of the to-be-displayed picture.

9. An electronic device, comprising:
a determining unit, configured to determine a type of content comprised in a to-be-displayed picture;
a blue light filtering unit, configured to: when the determining unit determines that the to-be-displayed picture comprises to-be-displayed content of a first type, reduce a blue light component in an area in which the to-be-displayed content of the first type is located; and
a display unit, configured to display a to-be-displayed picture obtained after processing by the blue light filtering unit.

10. The electronic device according to claim 9, wherein the determining a type of content comprised in a to-be-displayed picture comprises: obtaining to-be-displayed content comprised in the to-be-displayed picture; extracting a feature of the to-be-displayed content; and performing pattern recognition based on the feature of the to-be-displayed content, and determining a type of the to-be-displayed content.

11. The electronic device according to claim 9, wherein the determining a type of content comprised in a to-be-displayed picture comprises: determining a type of a to-be-displayed file; and determining, based on the type of the to-be-displayed file, the type of the content comprised in the to-be-displayed picture.

12. The electronic device according to any one of claims 9 to 11, wherein the reducing a blue light component in an area in which the to-be-displayed content of the first type is located comprises: reducing a value of a B component in an RGB value of each pixel in the area in which the to-be-displayed content of the first type is located.

13. The electronic device according to any one of claims 9 to 11, wherein the reducing a blue light component in an area in which the to-be-displayed content of the first type is located comprises: determining a ratio of a size of the area in which the to-be-displayed content of the first type is located to that of a display of the electronic device; and when the ratio is greater than a first value, reducing blue light components in all areas of the display of the electronic device.

14. The electronic device according to claim 13, wherein the reducing blue light components in all areas of the display of the electronic device comprises: lowering a display color temperature of the display of the electronic device.

15. The electronic device according to any one of claims 9 to 14, wherein the first type comprises a character.

16. The electronic device according to any one of claims 9 to 15, wherein the blue light filtering unit is further configured to reduce a blue light component in a blank area of the to-be-displayed picture.

17. An electronic device, comprising at least one processor and a display, wherein:
the at least one processor is configured to: determine a type of content comprised in a to-be-displayed picture; and when the to-be-displayed picture comprises to-be-displayed content of a first type, reduce a blue light component in an area in which the to-be-displayed content of the first type is located; and
the display is configured to display a to-be-displayed picture obtained after processing by the at least one processor.

18. The electronic device according to claim 17, wherein the determining a type of content comprised in a to-be-displayed picture comprises: obtaining to-be-displayed content comprised in the to-be-displayed picture; extracting a feature of the to-be-displayed content; and performing pattern recognition based on the feature of the to-be-displayed content, and determining a type of the to-be-displayed content.

19. The electronic device according to claim 17, wherein the determining a type of content comprised in a to-be-displayed picture comprises: determining a type of a to-be-displayed file; and determining, based on the type of the to-be-displayed file, the type of the content comprised in the to-be-displayed picture.

20. The electronic device according to any one of claims 17 to 19, wherein the reducing a blue light component in an area in which the to-be-displayed content of the first type is located comprises: reducing a value of a B component in an RGB value of each pixel in the area in which the to-be-displayed content of the first type is located.

21. The electronic device according to any one of claims 17 to 19, wherein the at least one processor is further configured to: determine a ratio of a size of the area in which the to-be-displayed content of the first type is located to that of the display; and when the ratio is greater than a first value, reduce blue light components in all areas of the display.

22. The electronic device according to claim 21, wherein the reducing blue light components in all areas of the display comprises: lowering a display color temperature of the display of the electronic device.

23. The electronic device according to any one of claims 17 to 22, wherein the first type comprises a character.

24. The electronic device according to any one of claims 17 to 23, wherein the at least one processor is further configured to reduce a blue light component in a blank area of the to-be-displayed picture.

25. A computer readable storage medium, wherein the computer readable storage medium stores an instruction, and when the instruction runs on a computer, the computer performs the method according to any one of claims 1 to 8.

26. A computer program product, wherein the computer program product comprises an instruction, and when the instruction runs on a computer, the computer performs the method according to any one of claims 1 to 8.
